# EUROPEAN PATENT APPLICATION

(11) **EP 1 936 560 A1**
(43) Date of publication of application: **25.06.2008**
(21) Application number: 07380364.5
(22) Date of filing: 17.12.2007
(51) Int. Cl.: G06Q 30/00, H04L 29/08

(54) **Purchase incentive process and system based on the location and context of a user of mobile telephony equipment**

(30) Priority: 15.12.2006 ES 200603201
(71) Applicant: Vodafone Group PLC, Newbury Berkshire RG14 2FN (GB); Vodafone España, S.A., 28108 Alcobendas (Madrid) (ES)
(72) Inventor: Marin Garcia, Francisco Jose, 28108 Alcobendas (Madrid) (ES); Cajigas Bringas, Guillermo, 28108 Alcobendas (Madrid) (ES); Touset Rios, Miguel Angel, 28108 Alcobendas (Madrid) (ES)
(74) Representative: Carpintero Lopez, Francisco

(57) **Abstract**

The invention relates to a purchase incentive process for purchasing at least one product for a user (1) of mobile telephony equipment (10), which comprises:
- locating and identifying at least one mobile telephony equipment (10) within a certain area (100);
- obtaining information relating to a user profile from a server of mobile telephony network to which the user belongs;
- sending information about at least a first product of a product list associated to said certain area to the at least one mobile telephony equipment (10) located and identified within said area; the information relating to the user profile being used to decide which product from the product list is offered to the user;
- displaying said information about said at least one product to the user of the mobile telephony equipment and/or offering him or her the possibility of purchasing said product.

The invention also relates to a purchase recommendation or incentive system for a purchasing at least one product for a user of mobile telephony equipment.

## Description

### Object of the Invention

The present invention is comprised within the field of mobile telecommunications and more specifically in a purchase recommendation or incentive system based on location by means of short range radio technology - such as Bluetooth.

### Background of the Invention

There are currently location systems integrated and adapted to the mobile network or it is also known that the network and its terminals can use the GPS system for locating users. But current purchase systems based on the mobile do not take into account the geographic position in which the user is located (not even his or her relative position), nor the information about the environment in which the user is located; it simply does not have information of the context in which the user of the mobile terminal makes the purchases. Due to this ignorance of the position of the user it is impossible to influence the environment surrounding him or her using his or her mobile terminal. In other words, the location of a mobile equipment operating in a mobile network is currently not being used, nor the information linked to the environment, such as for example the song that is being listened to at that time at that location site as a means for recommending purchases, following the same example, songs depending on the location of the user of the mobile terminal in a certain place and on the information related to the location site: the song which is being listened to at a specific place at a certain time.

The systems indicated herein have the following drawbacks in relation to the scope of the present invention:
- lack of precision in the native systems of mobile networks;
- indoor coverage problems in the case of GPS;
- and in general terms, deployment difficulties due to the need of changing elements of the mobile network or of the mobile terminals. The direct consequence is that the number of usable terminals -with the necessary coverage and precision- is scarce.
- they are permanent location systems that are difficult to disconnect once the user has given his or her consent.

### Description of the Invention

The invention relates to a purchase incentive process and system based on the location and context of mobile telephony equipment according to claims 1 and 7 respectively. Preferred embodiments of the system and of the process are defined in the dependent claims.

The present invention provides a purchase incentive system which takes into account information about the context and/or situation of the user of mobile telephony equipment (generally simply called "mobile terminal") in order to offer or not offer him or her a certain product and can therefore offer relevant and additional information in said mobile terminal in order to stimulate the purchase of a certain item, such as for example songs (music). Unlike known purchase systems, the purchase recommendation or incentive system of the invention is aware of the position of the user, for which it uses a location system to locate the situation of the mobile terminal of the user.

According to a first aspect of the invention, it relates to a purchase incentive system for purchasing at least one product or service for a user of mobile telephony equipment, comprising:
- a location system for locating said mobile telephony equipment based on short range radio technology, configured to:
   - locate and identify at least one mobile telephony equipment as a response to the fact that said equipment is located in an area defined by said location system, and to send credentials of said located user to an interaction system, the location system being preferably configured such that the user can only be located and identified if he or she is subscribed to and has a location functionality activated; and to
   - receive from the interaction system information relating to an application server associated to a system generating a product list;
- said interaction system associated to said location system which is configured to:
   - manage said user identification using said user credentials, and accessing a mobile network to which the user belongs, obtaining from such mobile network a profile of said user including information about whether or not said user has active purchase recommendations for purchasing a certain type of products; and to
   - interact with said system generating a product list, providing it with the user identification and profile;
- said system generating a product list being associated to the interaction system and configured to use the user identification and profile in order to provide said at least one mobile telephony equipment located and identified within the area with information of at least one product from the product list;
- said at least one mobile telephony equipment being configured, in response to receiving said information, to display by means of a user interface said information about said at least one product to the user of the mobile telephony equipment and/or offer him or her the possibility of purchasing said product.

Said information relating to the application server is preferably sent by the interaction system through the location system to the mobile telephony equipment of the user; and can consist of icons and/or URLs corresponding to said application server.

In response to a purchase request for purchasing said product by the mobile telephony equipment from the network, a purchase server of the network is preferably configured to send a download request to a product database that at least contains said requested product, and send said requested product to the mobile telephony equipment of the user.

The location system preferably obtains user identification information protecting the privacy of such user; i.e. a reference to the user is obtained from the equipment that is valid only for the communication between the location server and the mobile network to which the user belongs.

Said location system can further have an environment associated to said area and the system generating a product list is further configured to use the user identification and profile to modify said environment.

The interaction system is preferably configured so that during the process of locating and identifying the user it receives a user profile from the mobile telephony network to which the equipment of the user belongs. This user profile can be used both to know if the user is subscribed to the service and to know certain data about the users, treated in such a way that privacy is protected, and therefore using it to make specific offers to the user and to influence the environment in which the user is located, such as for example to adapt the environment to the tastes of the user described in his or her profile (music, lighting, ...).

The application server preferably executes the logic of the Web page providing interaction with the user and obtains real time information from the system generating the product list. The application server is accessed by the user once the user receives the corresponding URLs.

The location system can be based on a Bluetooth® beacon although other close range radio technologies can also be used.

A second aspect of the invention relates to a purchase incentive process for purchasing at least one product for a user of mobile telephony equipment, which comprises:
- locating and identifying at least one mobile telephony equipment within a certain area which can be defined by a location system;
- obtaining information relating to a user profile from a server of mobile telephony network to which the user belongs;
- sending information about at least a first product of a product list associated to said certain area to the at least one mobile telephony equipment located and identified within said area; the information relating to the user profile is used to decide which product from the product list is offered to the user;
- displaying said information about said at least one product to the user of the mobile telephony equipment and/or offering him or her the possibility of purchasing said product.

Locating and identifying by the location system preferably consists of:
- setting up a connection between a beacon forming part of the location system and the user equipment, the connection of which depends on the type short range radio technology used;
- sending by the user equipment and receiving by the beacon a user credential, which can identify the mobile network operator providing service to the user and a reference to the user for that mobile network and that location service, preferably without revealing information relating to his or her privacy;
- requesting, by the interaction system, to the mobile network operator of the authorization of the user equipment for the use of the services associated to the location system;
- receiving by the interaction system, the authorization for using the services associated to the location system and furthermore, additional user information.

If the user of the mobile telephony equipment wants said product he or she preferably sends a purchase request for purchasing the product to the network, in which a purchase server of the network sends a download request to a product database containing at least said requested product and sends said requested product to the mobile telephony equipment of the user in which the product is downloaded.

The information about the user profile is preferably sent with user privacy protection.

### Brief Description of the Drawings

A drawing will be very briefly described below which aids in better understanding the invention and which is specifically related to an embodiment of said invention set forth as a non-limiting example thereof.

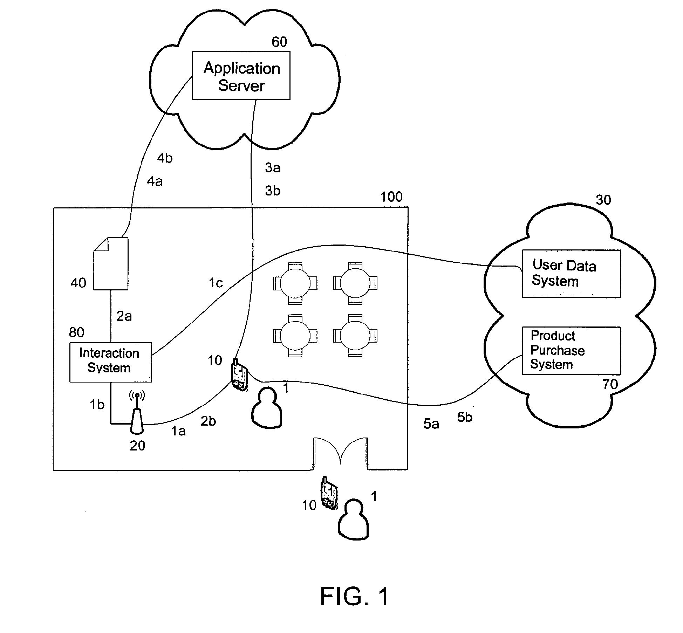

Figure 1 schematically shows the operation of the access control system of the invention and the main elements involved therein.

### Description of a Preferred Embodiment of the Invention

Figure 1 shows a user 1 of a mobile terminal 10. This user is first outside the bar or pub 100. This bar or pub has an incentive or recommendation system for purchasing products consisting of a location system 20, an interaction system 80 and a product list 40.

The location system 20 consists of:
- by means of a Bluetooth beacon (which could also be defined with any short range radio access such as WiFi, ZigBee or RFID) an area corresponding approximately to the dimensions of said bar or pub is defined. In the event that Bluetooth is used, the terminal equipment 10 of the user and the beacon will set up a connection;
- a software manages the user identification, preferably protecting his or her privacy. The identification of the user is obtained by the location system in the form of credentials which the terminal equipment of the user sends to the beacon through the connection. This software also manages the interaction with the interaction system.

The interaction system can manage the interaction between the location system, the product list and the mobile network 30 to which the mobile terminal of the user belongs.

The product list 40 of the pub is a system for selecting songs to be listened to on the premises.

When the user is outside the pub he or she is not located by the location system.

Later, when the user of the mobile terminal 10 enters the pub 100 the location system and the mobile terminal of the user interact such that the location system identifies the user and now has him or her located. In this case it is carried out by means of the following process:
- Automatic connection via Bluetooth® between the terminal 10 of the user and the beacon in the pub 100;
- sending by the terminal 10 of the user of a registration request on the location system 20 of the premises; this registration request contains the user credentials (step 1a).
- the user credentials are passed to the interaction system (step 1 b);
- the user credentials containing a reference to the provider of the mobile network of the user are used to make a request to the provider of the mobile network 30 of the user confirming that the user is subscribed to the service of the premises and can use it;
- the provider of the mobile network 30 of the user confirms the subscription to the service in a return message further containing a reference to a Web page of the application server 60 providing the service; this return message further contains information about the user profile which can be used both to recommend songs or to choose the type of music that is played on the premises (step 1 c).
- The information and the user profile can be passed to the product list 40 to be used when recommending songs or choosing the type of music that is played on the premises (step 2a).

Since the user is identified and preferably his or her identity is protected, the system can consult the profile of the user in the mobile telephony network 30 in order to know if the user wants the purchase of a certain item, in this case songs, to be suggested to him or her (step 1 c).

The interaction system passes the reference of the Web page to the beacon and such beacon sends it to the terminal of the user (step 2b). The terminal of the user automatically accesses the Web page 60 (step 3a) from which the interaction with the system of the premises 40 is provided (step 4a).

A system generating a product list of the premises 40 periodically generates information about the song being played at that time on the premises; this information about the song is transmitted in real time to the Web page (step 4b).

From the Web page of the application server 60 and making use of the information provided by the system generating the product list 40, the purchase and download of the song which is being played (step 3b) is suggested on the terminal 10 of the user in real time, such that the user can request to purchase such song by simply selecting it.

The interaction system 80 passes to the system generating the product list 40 user information which it receives from the mobile operator providing the service to the user equipment. This information can be used from the system generating the product list in order to show advertisements according to the information received and to generate active product recommendations.

If the user decides, on the Web page of the application server, to purchase and download the song being played at that time, the Web browser of the terminal will be redirected on a song download application 70 of the operator of the mobile network 40 (step 5a). The downloading process of the song will be automatically triggered on the mobile (step 5b).

## Claims

1. A purchase incentive system for purchasing at least one product for a user (1) of mobile telephony equipment (10), comprising:
- a location system (20) for locating said mobile telephony equipment based on short range radio technology, configured to:
- locate and identify at least one mobile telephony equipment (10) as a response to the fact that said equipment is located in an area (100) defined by said location system, and to send credentials of said located user to an interaction system (80); and to
- receive from the interaction system information relating to an application server (60) associated to a system generating a product list (40);
- said interaction system (80) associated to said location system (20), configured to:
- manage said user identification using said user credentials and accessing a mobile network (30) to which the user belongs, obtaining from such mobile network a profile of said user including information about whether or not said user has active purchase recommendations for purchasing a certain type of products; and to
- interact with said system generating a product list (40), providing it with the user identification and profile;
- said system generating a product list (40) being associated to the interaction system (80), and configured to use the user identification and profile in order to provide said at least one mobile telephony equipment (10) located and identified within the area (100) with information of at least one product from the product list;
- said at least one mobile telephony equipment being configured, in response to said reception, to display by means of a user interface said information about said at least one product to the user of the mobile telephony equipment and/or offer him or her the possibility of purchasing said product.

2. A system according to claim 1, **characterized in that** said information relating to the application server (60) is sent by the interaction system (80) through the location system (20) to the mobile telephony equipment (10) of the user.

3. A system according to claim 2, **characterized in that** said information relating to the application server (60) consists of icons and/or URLs corresponding to said application server (60).

4. A system according to any of the previous claims, **characterized in that** said location system (20) has an environment associated to said area (100), and the system generating a product list (40) is further configured to use the user identification and profile to modify said environment.

5. A system according to any of the previous claims, **characterized in that** the information about the user profile is sent with user privacy protection.

6. A system according to any of the previous claims, **characterized in that** in response to a purchase request for purchasing said product by the mobile telephony equipment from the network (30), a purchase server of the network is configured to send a download request to a product database containing at least said requested product, and to send said requested product to the mobile telephony equipment of the user.

7. A purchase incentive process for purchasing at least one product for a user (1) of mobile telephony equipment (10), which comprises:
- locating and identifying at least one mobile telephony equipment (10) within a certain area (100);
- obtaining information relating to a user profile from a server of mobile telephony network to which the user belongs;
- sending information about at least a first product of a product list associated to said certain area to the at least one mobile telephony equipment (10) located and identified within said area; the information relating to the user profile being used to decide which product from the product list is offered to the user;
- displaying said information about said at least one product to the user of the mobile telephony equipment and/or offering him or her the possibility of purchasing said product.

8. A purchase incentive process according to claim 7, **characterized in that** if the user of the mobile telephony equipment wants said product he or she sends a purchase request for purchasing the product to the network (30), in which a purchase server of the network sends a download request to a product database containing at least said requested product, and sends said requested product to the mobile telephony equipment of the user in which the product is downloaded.

9. A purchase incentive process according to any of claims 7-8, **characterized in that** the information relating to the user profile is sent with user privacy protection.
